# EUROPEAN PATENT SPECIFICATION

(11) **EP 2 473 751 B1**
(45) Date of publication and mention of the grant of the patent: **02.11.2016**
(21) Application number: 09849036.0
(22) Date of filing: 10.12.2009
(51) Int. Cl.: F16D 65/12

(54) **CARBON- CERAMIC BRAKE DISC ASSEMBLY**
KOHLENSTOFF-KERAMIK-BREMSSCHEIBENANORDNUNG
ENSEMBLE DISQUE DE FREIN CARBONE-CÉRAMIQUE

(30) Priority: 02.09.2009 KR 20090082406
(43) Date of publication of application: 11.07.2012
(73) Proprietor: Dacc Carbon, Jeonju-Si, Jeollabuk-Do, (KR)
(72) Inventor: LEE, Junsang, Seoul 135-080 (KR); IM, Dongwon, Gimhae Gyeongsangnam-do 621-80, (KR); CHOI, Yeonho, Tongyeong, Gyeongsangnam-do 650-090 (KR); KANG, Jungsuk, Jeonju Jeollabuk-do 561-757 (KR); CHEA, Byunggun, Jeonju, Jeollabuk-do 561-232 (KR)
(74) Representative: Ter Meer Steinmeister & Partner
(86) International application number: PCT/KR2009/007392
(87) International publication number: WO 2011/027945

(56) References cited:
- EP-A1- 1 801 448
- WO-A1-02/38979
- DE-C1- 19 522 677
- DE-U1- 9 422 141
- DE-U1- 20 221 132
- US-B1- 6 575 637

## Description

### Technical Field

The present invention relates to a carbon- ceramic brake disc assembly.

### Background Art

A brake for an automotive falls into two categories: a drum brake and a disc brake.

The disc brake includes a disc and pads.

The disc brake decelerates or stops a moving automotive by forcing the pads against the rotating disc. Braking action converts kinetic energy into heat. This requires the disc and pad to be made of a material which is lightweight, heat-resistant, erosion-resistant, wear-resistant, and high in strength and to have high coefficients of friction. In this respect, silicon-infiltrated, carbon fiber-reinforced carbon is a material suitable for manufacturing the disc and pad.

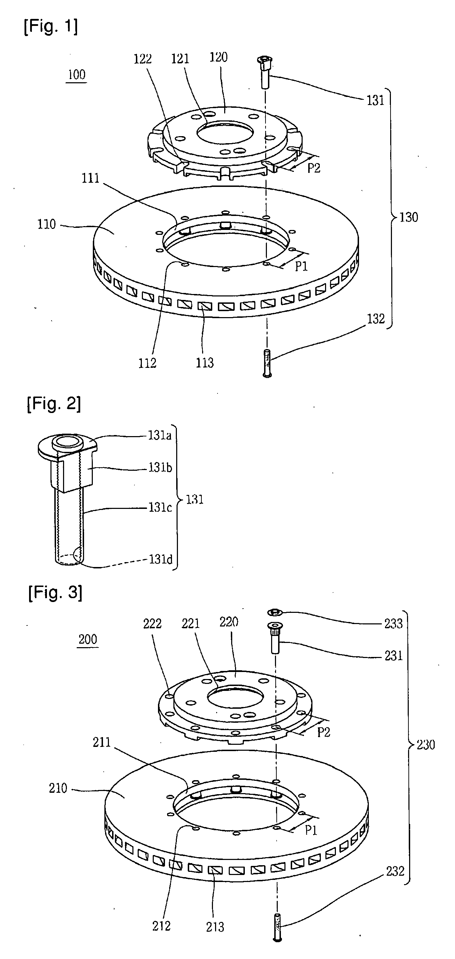

FIG.1 is a perspective, exploded view of a conventional carbon- ceramic brake disc assembly. FIG.2 is a perspective view of a bushing of FIG.1.

As shown in FIG.1, a conventional carbon- ceramic brake disc assembly 100, known e.g. from WO 02/38979, includes a carbon- ceramic brake disc 110, a hat part 120, and a connection unit 130.

The carbon- ceramic brake disc 110 is made of silicon-infiltrated, carbon fiber-reinforced carbon. The carbon- ceramic brake disc 110 has a first axis hole111 in the center thereof, and a plurality of holes 112 around the first axis hole 111. The plurality of holes 112 are pierced to be spaced a given distance P1 relative to each other, in a circular line concentric with the center of the carbon- ceramic brake disc 110.

The carbon- ceramic brake disc 110 has cool channels 113 inside. Each of the cool channels 113 is pierced through a core body of the carbon- ceramic brake disc 110 in the radial direction, from the first axis hole 111 to the outer circumferential edge thereof (or vice versa). Outside air, introduced into the cool channels, cools down the carbon- ceramic brake disc 110 while in use.

The hat part 120 is made from a metal, such as a stainless steel. The hat part 120 has a second axis hole 121 in the center thereof. The hat part 120 has a plurality of recesses 122 along the circumferential edge thereof. The plurality of recesses 122 are spaced a given distance P2 relative to each other. Each of the recesses 122, when viewed from above, has a U- shaped across section. That is, each of the recesses 122 is shaped like one formed by cutting away a horseshoe- shaped portion from the circumferential edge of a cylinder. The bottom of each of the recesses 122 is convex in the radial direction of the hat part 120. The plurality of the holes 112 in the carbon- ceramic brake disc 110 aligns with the plurality of the recesses 122.

The connection unit 130 connects the carbon- ceramic brake disc 110 and the hat part 120. The connection unit 130 includes a bushing 131 and a bolt 132.

As shown in FIG.2, the bushing 131 includes a cap 131A , a head 131B, and a body 131C.

The head 131B has, when viewed from above, has such a cross section which is shaped by cutting a circle along a secant line intersecting a circle in two points. The head 131B has a D-shaped cross section. That is, the head 131B has the upper, bottom, and lateral faces which are plane, and the front and back faces, one of which is convex. The head 131B with this configuration fits into the recess 122 with a uniform clearance that approaches zero.

When the bushing 131B is inserted into the recess 122 in the upright position, the head 131B fits into it, thereby remaining held firmly in place without turning. This is done because the head 131B has the same lateral faces as the recess 122

The bushing 131 has a threaded hole 131D inside, lengthwise. That is, the threaded hole 131D is pierced through the head 131A, the head 131B, and the body 131C.

The bolt 132 is inserted into the threaded hole 131D.

The carbon- ceramic brake 110 and the hat part 120 are connected to each other, in the following manner.

The hat part 120 is mounted on the carbon- ceramic brake disc 110. The holes 112 in the carbon- ceramic brake disc 110 align with the recesses 122 in the hat part 120.

The head 131B of the bushing 131 fits into the recess 122 in the hat part 120 and the body 131C of the bushing 131 is inserted into the hole 112 in the carbon- ceramic brake disc 110.

Above-mentioned configurations of the hat part 120 and the bushing 131 serve to prevent the bushing 131 from turning when the bushing 131 is installed to connect the carbon- ceramic brake disc 110 and the hat part 120. However, manufacturing of the hat part 120 and the bushing 131 requires many mechanical machining processes (including shaping, drilling, turning, milling, and abrasive machining). The major limitation of such a mechanical machining process, which has to be performed on a given material such as a stainless steel, is a strict requirement for geometrical shape and dimensional precision. This makes it difficult to accomplish greater accuracy and precision but at no increase in cost.

### Disclosure of Invention

### Technical Problem

An objective of the present invention is to make simple both configurations of a hat part and a connection unit connecting the hat part and a carbon- ceramic brake disc at low cost, thereby permitting a firm connection between the hat part and the carbon-ceramic brake disc.

### Solution to Problem

According to an aspect of the present invention, there is provided a carbon- ceramic brake disc assembly including, a carbon- ceramic brake disc having a first axis hole in the center thereof, and a plurality of first holes around the first axis hole, a hat part having a second axis hole in the center thereof, and a plurality of second holes around the second axis hole, and a connection unit connecting the carbon- ceramic brake disc and the hat part, including bushings, each of which includes a head, a body connecting to the head, and serrations protruding the outer surface of the body along the length of the body, with a threaded hole pierced through the head and body, lengthwise,the body being inserted into the first hole in the carbon- ceramic brake disc, and the serrations being penetrated into the internal surface of the second hole in the hat part when forced to be inserted into the second hole in the hat part, and a bolt being inserted into the threaded hole in the head and body of the bushing.

The foregoing and other objects, features, aspects and advantages of the present invention will become more apparent from the following detailed description of the present invention when taken in conjunction with the accompanying drawings.

### Brief Description of Drawings

The accompanying drawings, which are included to provide a further understanding of the invention and are incorporated in and constitute a part of this specification, illustrate embodiments of the invention and together with the description serve to explain the principles of the invention.

In the drawings:
FIG.1 is a perspective, exploded view of a conventional carbon- ceramic brake disc assembly
FIG.2 is a perspective view of a bushing of FIG.1
FIG.3 is a perspective, exploded view of an embodiment of a carbon- ceramic brake disc assembly according to the present invention
FIG.4 is a perspective view of a bushing as shown in FIG.3 and
FIG.5 is a cross- sectional view illustrating that serrations of the bushing, as shown in FIG.3, are penetrated into the internal surface of a second hole in a hat pat.

### Mode for the Invention

Referring to the accompanying drawings, an embodiment of a carbon- ceramic brake disc assembly according to the present invention is now described.

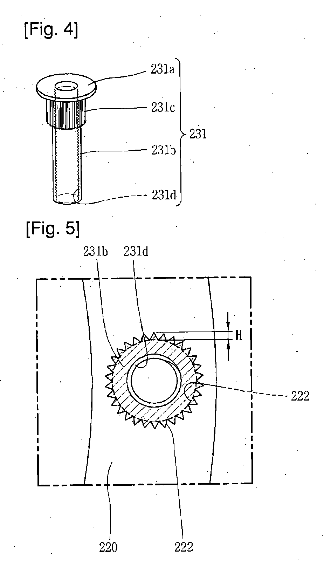

FIG.3 is a perspective, exploded view of an embodiment of a carbon- ceramic brake disc assembly according to the present invention. FIG.4 is a perspective view of a bushing as shown in FIG.3. FIG.5 is a cross- sectional view illustrating that serrations of the bushing, as shown in FIG.3, are penetrated into the internal surface of a second hole in a hat pat.

As shown in FIG.3, the carbon- ceramic brake disc assembly 200 includes a carbon-ceramic brake disc 210, a hat part 220, and a connection unit 230.

The carbon- ceramic brake disc 210 is made of silicon-infiltrated, carbon fiber-reinforced carbon.

The carbon- ceramic brake disc 210 has a firstaxis hole 211 in the center thereof, and has a plurality of first holes 212 around the first axis hole 211. The plurality of the first holes 212 are located in a circular line concentric with the center of the carbon-ceramic brake disc 210 and are spaced a constant distance P1 relative to each other.

The carbon- ceramic brake disc 210 has cooling channels 213 inside. Each of the cooling channels 213 is pierced through a core body of the carbon- ceramic brake disc 210, in the radial direction, from the first axis hole 211 to the outer circumferential edge thereof (or vice versa). Outside air, introduced through the cooling channels 213, cools down the carbon- ceramic brake disc 210 while in use.

The hat part 220 may be made of a metal such as a stainless steel with the SAE grade 304. The hat part 220 has a second axis hole 221 in the center thereof, and has a plurality of the second holes 222 around the second axis hole 221. The plurality of the second holes 222 are located in a circular line concentric with the center of the hat part 220 and are spaced a constant distance P2 relative to each other.

The circular line concentric with the center of the carbon- ceramic brake disc is the same as the circular line concentric with the center of the hat part, and the distance P1 equals to the distance P2. Thus, the plurality of the second holes 222 in the hat part 220 aligns with the plurality of the first holes 212 in the carbon- ceramic brake disc 210.

The connection unit 230 connects the carbon- ceramic brake disc 210 and the hat part 220. The connection unit 230 includes a bushing 231, a bolt 232, and a nut 233.

As shown in FIG.4, the bushing 231 includes a head 231A, a body 231B, and serrations 231C.

The head 231A connects to the body 231B. The head 231A and The body 231B may be made from a single piece of material. The bushing 231 has a threaded hole 231D inside. That is, the threaded hole 231D is lengthwise pierced through the head 231A and body 231B making up the bushing 231.

The bushing 231 is madeof a metal that is higher in hardness than a metal which the hat part 220 is made of. The bushing 231 may be made of a stainless steel with the SAE 410, which is higher in hardness than a stainless steel with the SAE grade 304.

The body 231B of the bushing 231 has the same diameter as the second hole 222 in the hat part 220, but has a smaller diameter than the first hole 212 in the carbon-ceramic brake disc 210. As a result, the body 231B of the bushing 231 is readily inserted into and withdrawn from the first hole 212 in the carbon- ceramic brake disc 210. But, once it is inserted into the second hole 222 in the hat part 220, the body 231B of the bushing 231 is difficult to be withdrawn from the second hole 222. This is because the serrations 231C are penetrated into the inner surface of the second hole 222 in the hat part 220.

The serrations 231C protrude from the outer surface of the body 231B, along the length of the body 231B of the bushing 231. The serrations 231C are shaped by machining a plain outer surface of the material for the body 231B lengthwise. Each of the serrations 231C is 0.1∼0.2mm in height. The number of the serrations 231C may range from 20 to 30, which is suitable for preventing the body 231B of the bushing 231 from turning, when the body 231B of the bushing 231 is inserted into the second hole 222 in the hat part 220.

A procedure is now described for assembling the carbon-ceramic brake disc 210 and the hat part 220 with the connection unit 230.

As shown in FIGs 3 and 4, the bushing 231 is forced to be inserted into the second hole 222 in the hat part 220. At this point, the serrations 231C of the bushing 231 are penetrated into the inner surface of the second hole 222 in the hat part 220, as shown in FIG.5. This is readily done because the bushing 231 is made of a stainless steel with the SAE 410, which is higher in hardness than a stainless steel with the SAE grade 304 which the hat part 220 is made of, and the height of each of the serrations 231C is within a relatively small range of 0.1 to 0.2mm. As a result, the bushing 231 is prevented from turning.

Next, the bushing 231 is mounted to the carbon- ceramic brake disc 210, to align the second hole 222 with the first hole 212, and then the body 231B of the bushing 231 is inserted into the first hole 212 in the carbon- ceramic brake disc 210.

The bolt 232 is inserted into the threaded hole 231D in the bushing 231, and the nut 233 is screwed onto the end portion of the bolt 232, which protrudes from the threaded hole 231D, thereby completing connection between the carbon- ceramic brake disc 210 and the hat part 220.

The carbon- ceramic brake disc assembly according to the present inventions has the following advantages.

Both configurations of the hat part and the bushing are made simple at low cost. Penetration of the serrations of the bushing into the hole in the hat part permits a firm connection between the hat part and the carbon- ceramic disc.

The bushing with the serrations weighs 40 percent less than the conventional bushing with the shaped head.

Screwing of the nut onto the bolt provides an additional firm connection between the hat part and the carbon- ceramic brake disc.

As the present invention may be embodied in several forms without departing from the spirit or essential characteristics thereof, it should also be understood that the above-described embodiments are not limited by any of the details of the foregoing description, unless otherwise specified, but rather should be construed broadly within its scope as defined in the appended claims, and therefore all changes and modifications that fall within the metes and bounds of the claims are therefore intended to be embraced by the appended claims.

## Claims

1. A carbon- ceramic brake disc assemble 200 comprising:
a carbon- ceramic brake disc 210 having a first axis hole 211 in the center thereof, and a plurality of first holes 212 around the first axis hole 211;
a hat part 220 having a second axis hole 221 in the center thereof, and a plurality of second holey 222 around the second axis hole 221; and
a connection unit connecting the carbon- ceramic brake disc and the hat part 220, **characterised by**:
bushings 231, each of which includes a head 231A, a body 231B connecting to the head 231A, and serrations 231C protruding the outer surface of the body 231B along the length of the body, with a threaded hole 231D pierced through the head and body, lengthwise, the body 231B being inserted into the first hole 212 in the carbon-ceramic brake disc 210, and the serrations 231C being penetrated into the internal surface of the second hole 222 in the hat part 220 when forced to be inserted into the second hole in the hat part and
a bolt 232 being inserted into the threaded hole 231D in the head and body of the bushing 231.

2. The carbon- ceramic brake disc assembly 200 according to claim 1, wherein the carbon- ceramic brake disc 210 has the plurality of the first holes 212 which are located in a circular line concentric with the center thereof, and are spaced a constant distance relative to each other, and the hat part 220 has the plurality of the second holes 222, which are located in a circular line concentric with the center thereof and are spaced the constant distance relative to each other, with the circular line concentric with the center of the carbon- ceramic brake disc 210 being the same as the circular line concentric with the center of the hat part 220.

3. The carbon-ceramic brake disc assembly 200 according to claim 1, wherein the bushing 231 is made of a material which is higher in hardness than a material which the hat part is made of.

4. The carbon- ceramic brake disc assembly 200 according to claim 3, wherein the bushing 231 is made of a stainless steel with the SAE grade 410 and the hat part is made of a stainless steel with SAE grade 304.

5. The carbon-ceramic brake disc assembly 200 according to claim 1, wherein the body 231A of the bushing 231 has the same diameter as the second hole 222 in the hat part 220, but has a smaller diameter than the first hole 211 in the carbon-ceramic brake disc 210.

6. The carbon- ceramic brake disc assembly 200 according to claim 1, wherein the height of each of the serrations 231C is within a relatively small range of 0.1 to 0.2mm.

7. The carbon- ceramic brake disc assembly 200 according to any of claims 1 - 6, wherein the connection unit further comprises a nut 233 which is screwed on to the end portion of the bolt 232, which protrudes from the threaded hole 231D.

## Patentansprüche

1. Carbon-Keramik-Bremsscheibenanordnung (200), die Folgendes umfasst:
eine Carbon-Keramik-Bremsscheibe (210), die in ihrem Zentrum ein erstes Achsenloch (211) und mehrere erste Löcher (212) um das erste Achsenloch (211) besitzt,
ein Kappenteil (220), das ein zweites Achsenloch (221) in seinem Zentrum und mehrere zweite Löcher (222) um das zweite Achsenloch (221) besitzt; und
eine Verbindungseinheit, die die Carbon-Keramik-Bremsscheibe und das Kappenteil (220) verbindet, **gekennzeichnet durch**:
Buchsen (231), die jeweils einen Kopf (231A), einen Körper (231B), der mit dem Kopf (231A) verbunden ist, und Kerbverzahnungen (231C), die von der äußeren Oberfläche des Körpers (231B) entlang der Länge des Körpers vorstehen, besitzen, wobei ein Gewindeloch (231D) längs **durch** den Kopf und den Körper verläuft, wobei der Körper (231B) in das erste Loch (212) in der Carbon-Keramik-Bremsscheibe (210) eingefügt ist und die Kerbverzahnungen (231C) in die innere Oberfläche des zweiten Lochs (222) in dem Kappenteil (220) eindringen, wenn sie gezwungen werden, in das zweite Loch in dem Kappenteil eingesetzt zu werden, und wobei ein Bolzen (232) in das Gewindeloch (231D) in dem Kopf und dem Körper der Buchse (231) eingesetzt ist.

2. Carbon-Keramik-Bremsscheibenanordnung (200) nach Anspruch 1, wobei die Carbon-Keramik-Bremsscheibe (210) die mehreren ersten Löcher (212), die sich in einer kreisförmigen Linie konzentrisch um deren Zentrum befinden und die relativ zueinander in einem konstanten Abstand beabstandet sind, besitzt und das Kappenteil (220) die mehreren zweiten Löcher (222), die sich in einer kreisförmigen Linie konzentrisch um deren Zentrum befinden und die relativ zueinander in dem konstantem Abstand beabstandet sind, besitzt, wobei die kreisförmige Linie, die um das Zentrum der Carbon-Keramik-Bremsscheibe (210) konzentrisch ist, gleich der kreisförmigen Linie ist, die um das Zentrum des Kappenteils (220) konzentrisch ist.

3. Carbon-Keramik-Bremsscheibenanordnung (200) nach Anspruch 1, wobei die Buchse (231) aus einem Material gefertigt ist, dass eine höhere Härte besitzt als ein Material, aus dem das Kappenteil gefertigt ist.

4. Carbon-Keramik-Bremsscheibenanordnung (200) nach Anspruch 3, wobei die Buchse (231) aus einem rostfreien Stahl der SAE-Sorte 410 gefertigt ist und das Kappenteil aus einem rostfreien Stahl der SAE-Sorte 304 gefertigt ist.

5. Carbon-Keramik-Bremsscheibenanordnung (200) nach Anspruch 1, wobei der Körper (231A) der Buchse (231) den gleichen Durchmesser wie das zweite Loch (222) in dem Kappenteil (220) besitzt, aber einen kleineren Durchmesser als das erste Loch (212) in der Carbon-Keramik-Bremsscheibe (210) besitzt.

6. Carbon-Keramik-Bremsscheibenanordnung (200) nach Anspruch 1, wobei die Höhe jeder Kerbverzahnung (231C) innerhalb eines relativ kleinen Bereichs von 0,1 bis 0,2 mm liegt.

7. Carbon-Keramik-Bremsscheibenanordnung (200) nach einem der Ansprüche 1 - 6, wobei die Verbindungseinheit ferner eine Mutter (233) umfasst, die auf den Endabschnitt des Bolzens (232), der aus dem Gewindeloch (231D) vorsteht, geschraubt ist.

## Revendications

1. Ensemble formant disque de frein en carbone-céramique (200) comprenant :
un disque de frein en carbone-céramique (210) ayant un premier trou axial (211) dans son centre, et une pluralité de premiers trous (212) autour du premier trou axial (211),
une partie en forme de chapeau (220) ayant un second trou axial (221) dans son centre, et une pluralité de seconds trous (222) autour du second trou axial (221) ; et
une unité de connexion qui connecte le disque de frein en carbone-céramique et la partie en forme de chapeau (220), **caractérisé par** :
des douilles (231), dont chacune inclut une tête (231A), un corps (231B) connecté à la tête (231A), et des cannelures (221C) en projection à la surface extérieure du corps (231B) le long de la longueur du corps, avec un trou taraudé (131D) percé à travers la tête et le corps, dans le sens de la longueur, le corps (231B) étant inséré dans le premier trou (212) dans le disque de frein en carbone-céramique (210) et les cannelures (231C) pénétrant dans la surface interne du second trou (222) dans la partie en forme de chapeau (220) lorsqu'elles sont forcées en insertion dans le second trou dans la partie en forme de chapeau, et
un boulon (232) qui est inséré dans le trou taraudé (231D) dans la tête et le corps de la douille (231).

2. Ensemble formant disque de frein en carbone-céramique (200) selon la revendication 1, dans lequel le disque de frein en carbone-céramique (210) est tel que la pluralité de premiers trous (212) sont situés dans une ligne circulaire concentrique avec son centre, et sont espacés d'une distance constante les uns par rapport aux autres, et la partie en forme de chapeau (220) est telle que la pluralité de seconds trous (222) sont situés dans une ligne circulaire concentrique avec son centre et sont espacés d'une distance constante les uns par rapport aux autres, la ligne circulaire concentrique avec le centre du disque de frein en carbone-céramique (210) étant la même que la ligne circulaire concentrique avec le centre de la partie en forme de chapeau (220).

3. Ensemble formant disque de frein en carbone-céramique (200) selon la revendication 1, dans lequel la douille (231) est réalisée en un matériau qui présente une dureté plus élevée qu'un matériau dont la partie en forme de chapeau est faite.

4. Ensemble formant disque de frein en carbone-céramique (200) selon la revendication 3, dans lequel la douille (231) est faite en un acier inoxydable de nuance SAE 410 et la partie en forme de chapeau est faite en un acier inoxydable de nuance SAE 304.

5. Ensemble formant disque de frein en carbone-céramique (200) selon la revendication 1, dans lequel le corps (131A) de la douille (231) a le même diamètre que le second trou (222) dans la partie en forme de chapeau (200), mais a un diamètre plus petit que le premier trou (211) dans le disque de frein en carbone-céramique (210).

6. Ensemble formant disque de frein en carbone-céramique (200) selon la revendication 1, dans lequel la hauteur de chacune des cannelures (231 C) est dans une plage relativement faible de 0,1 à 0,2 mm.

7. Ensemble formant disque de frein en carbone-céramique (200) selon l'une quelconque des revendications 1 à 6, dans lequel l'unité de connexion comprend en outre un écrou (233) qui est vissé sur la portion terminale du boulon (232), qui se projette depuis le trou taraudé (231D).
